(19) Europäisches Patentamt

European Patent Office

Office européen des brevets

(11) **EP 0 969 584 A1**

(12) **DEMANDE DE BREVET EUROPEEN**

(43) Date de publication:
**05.01.2000 Bulletin 2000/01**

(51) Int Cl.⁷: **H02M 3/155**

(21) Numéro de dépôt: **99410084.0**

(22) Date de dépôt: **29.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **16.10.1998 FR 9813169**
**29.06.1998 FR 9808430**

(71) Demandeur: **STMicroelectronics S.A.**
**94250 Gentilly (FR)**

(72) Inventeur: **Ravon, Jean-Michel**
**13710 Fuveau (FR)**

(74) Mandataire: **de Beaumont, Michel**
**1, rue Champollion**
**38000 Grenoble (FR)**

(54) **Alimentation à découpage basse tension non-isolée**

(57)  L'invention concerne un convertisseur de tension non-isolé, du type alimentation à découpage, comprenant un condensateur (Ci) aux bornes (Sp, Sn) duquel est prélevée une tension de sortie (Vout) régulée au moyen d'un circuit (11) de commande d'un interrupteur (1') de fourniture de courant à un élément inductif (Li), et comportant un moyen (Da) pour alimenter localement le circuit de commande à partir de l'énergie de l'élément inductif, l'élément inductif présentant un point milieu (3') entre deux enroulements (n1, n2) et la tension de sortie étant inférieure à la tension d'alimentation locale du circuit de commande de l'interrupteur à découpage.

Fig 8

EP 0 969 584 A1

## Description

La présente invention concerne le domaine des convertisseurs de puissance du type alimentations à découpage basse tension. L'invention s'applique, plus particulièrement, aux alimentations non-isolées, c'est-à-dire disposant d'un point commun avec le réseau d'alimentation alternative, par exemple, le secteur à 220 ou 110 volts. On notera toutefois que l'invention s'applique, plus généralement, à tout système d'alimentation à découpage propre à fournir une tension continue à une charge.

Un circuit d'alimentation à découpage du type auquel se rapporte la présente invention comporte toujours un élément inductif en série avec un commutateur, pour charger un condensateur aux bornes duquel est prélevée la tension de sortie, un circuit de commande du commutateur pour réguler la tension de sortie en modifiant les périodes de conduction du commutateur et une diode de roue libre de l'élément inductif. Un circuit d'alimentation à découpage reçoit une tension continue, généralement, une tension alternative redressée.

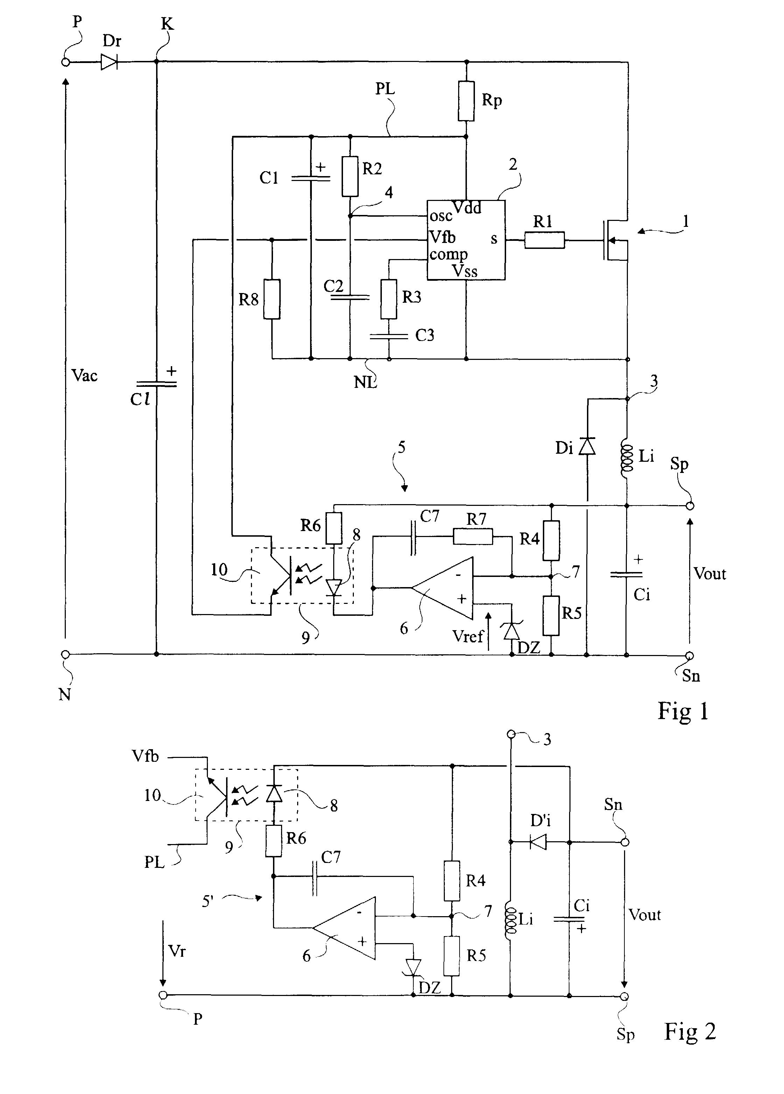

La figure 1 représente un exemple classique d'alimentation à découpage du type auquel s'applique la présente invention. Dans l'exemple de la figure 1, deux bornes P, N d'entrée reçoivent une tension alternative Vac, par exemple, la tension du secteur. Cette tension Vac fait l'objet d'un redressement, par exemple, un redressement monoalternance au moyen d'une diode Dr dont l'anode est connectée à la borne P et dont la cathode K délivre une tension redressée Vr. La tension Vr est généralement lissée au moyen d'un condensateur C1 connecté entre les bornes K et N. Les bornes K et N constituent les bornes d'entrées de l'alimentation à découpage proprement dite.

Le circuit de la figure 1 représente un montage connu sous la dénomination "convertisseur abaisseur de tension non-isolé" qui se caractérise par le fait que le commutateur 1 (par exemple, un transistor MOS à canal N) est monté en série avec une inductance Li et un condensateur Ci entre les bornes K et N d'application de la tension redressée. Ce convertisseur fonctionne en mode à découpage à une fréquence élevée non-audible (généralement supérieure à 20 kHz). L'interrupteur 1 est commandé par un circuit 2 qui fixe ses périodes de conduction et de blocage. Une diode Di de roue libre est connectée en parallèle avec l'association en série de l'inductance Li et du condensateur Ci, la cathode de la diode Di étant reliée au point milieu 3 de l'association en série de l'interrupteur 1 avec l'inductance Li.

Les bornes du condensateur Ci constituent deux bornes Sp, Sn de sortie du convertisseur, destinées à alimenter une charge (non représentée) par une tension Vout. Le circuit 2 de commande de l'interrupteur 1 est constitué d'un circuit de génération d'un signal de grille de commande du transistor 1 par modulation de largeur d'impulsion. Ce circuit 2 est associé à un montage d'alimentation locale constitué, dans cet exemple, d'un condensateur C1 d'accumulation d'énergie, aux bornes duquel le circuit 2 est alimenté. Une première borne positive PL du condensateur C1 est reliée, par l'intermédiaire d'une résistance Rp, à la borne K délivrant la tension redressée Vr. La borne négative NL du condensateur C1 est connectée au point milieu 3 de l'association en série du transistor 1 de l'inductance Li, et constitue le potentiel de référence d'alimentation du circuit 2. Le cas échéant, une diode Zener (non représentée) est montée en parallèle avec le condensateur C1 de manière à limiter la valeur de la tension d'alimentation locale entre deux lignes respectivement positive PL et de référence NL, correspondant aux bornes du condensateur C1.

Le circuit 2 de génération et de modulation de largeur d'impulsion est, par exemple, un circuit intégré commercialisé par la société STMicroelectronics sous la dénomination UCC3824. Ce circuit comporte deux bornes d'alimentation Vdd, Vss reliées respectivement aux lignes PL et NL, une borne s de sortie connectée, le cas échéant par l'intermédiaire d'une résistance R1 de contrôle de vitesse de commutation, à la grille du transistor 1, et trois bornes d'entrée de paramétrage OSC, Vfb et COMP. La borne OSC est destinée à fixer la fréquence d'un oscillateur que contient le circuit 2 pour générer les impulsions de commande. Cette fréquence est conditionnée par les valeurs respectives d'une résistance R2 et d'un condensateur C2 associés en série entre les lignes PL et NL et dont le point milieu 4 de l'association en série est connecté à la borne OSC. La borne Vfb est destinée à recevoir une consigne de régulation pour asservir la largeur des impulsions de commande sur la tension de sortie Vout afin de maintenir celle-ci à la valeur souhaitée. La borne COMP est connectée, par l'intermédiaire d'une résistance R3 en série avec un condensateur C3, à la ligne NL. La borne COMP constitue une borne d'entrée de compensation afin de stabiliser la boucle de régulation.

Le signal reçu par la borne Vfb du circuit 2 provient généralement d'un circuit d'erreur 5, ou de mesure de la dérive de la tension de sortie Vout par rapport à la valeur souhaitée. Le circuit 5 est généralement constitué d'un comparateur 6 (par exemple, un amplificateur opérationnel) dont une première borne d'entrée (non-inverseuse) reçoit une tension de référence Vref, fixée par une diode Zener DZ, et dont une deuxième borne d'entrée (inverseuse) est connectée au point milieu 7 d'une association en série de deux résistances R4, R5 connectées aux bornes du condensateur Ci.

Dans l'exemple représenté à la figure 1, la sortie du comparateur 6 est connectée à la cathode de la photodiode 8 d'un optocoupleur 9. L'anode de la photodiode 8 est reliée, par l'intermédiaire d'une résistance R6, à la borne positive Sp délivrant la tension de sortie Vout. L'amplificateur opérationnel 6 est généralement associé à une boucle de contre-réaction, par exemple, constituée d'un condensateur C7 en série avec une résistance R7 entre sa sortie et son entrée inverseuse. Le phototransistor 10 de l'optocoupleur 9 est connecté, par son collecteur, à la ligne positive PL d'alimentation locale du circuit 2 et, par son émetteur, à la borne Vfb du circuit 2. Une résistance R8 relie la borne Vfb à la ligne NL et constitue un convertisseur courant-tension en entrée Vfb du circuit 2.

Le cas échéant, pour inverser la commande, un transistor bipolaire (non représenté) est connecté entre la cathode de la photodiode 8 et la ligne de référence Sn, la base du transistor étant connectée à la sortie du comparateur 6.

Quand la tension prélevée au point 7 excède le seuil de tension fixée par la diode Zener DZ, la photodiode 8 est traversée par un courant et le potentiel de la borne Vfb passe donc à un niveau haut par la mise en conduction du phototransistor 10. A l'inverse, quand le phototransistor 10 est bloqué, le potentiel du signal Vfb est à un niveau bas.

Les dimensionnements respectifs du pont résistif R4, R5 et de la diode Zener DZ permettent de fixer la valeur de régulation de la tension Vout délivrée par le condensateur Ci. Par exemple, un amplificateur opérationnel 6, associé à une référence de tension Vref de 2,5 volts, est disponible sous forme d'amplificateur d'erreur en circuit intégré, commercialisé par la société STMicroelectronics sous la dénomination TL431.

On notera que, selon la valeur de l'inductance Li, le courant qui circule dans cette dernière est continu ou discontinu. On notera également que, pour une alimentation non-isolée, les condensateurs Ci et Cl ont une borne commune. De plus, si on souhaite mettre en oeuvre, en aval, des circuits de commutation sur la haute tension redressée présente aux bornes du condensateur C1, cette borne commune est la borne négative (point froid).

Un premier inconvénient des convertisseurs classiques de type alimentation à découpage est le recours obligatoire à un élément d'isolement constitué, soit d'un optocoupleur comme l'illustre la figure 1, soit d'un transformateur. En effet, le circuit intégré 2 de commande de l'interrupteur 1 est référencé à la source 3 du transistor 1 alors que la mesure effectuée par le circuit 5 a une référence sur la borne négative Sn du condensateur Ci. Ces références différentes rendent impossible une liaison directe entre le circuit de mesure 5 et le circuit de commande 2.

Un autre inconvénient est que l'alimentation du circuit de commande 2 nécessite une résistance (Rp) qui entraîne une dissipation importante dans le circuit. En effet, cette résistance doit permettre l'alimentation du circuit de modulation de largeur d'impulsion qui requiert, généralement, un courant de plusieurs dizaines de milliampères, et doit absorber la puissance liée à la forte différence de potentiels présente entre les bornes K et PL, au milieu des alternances de la tension Vr si celle-ci provient du secteur.

Un autre inconvénient d'un circuit classique tel que représenté à la figure 1 est que le bloc de commande comprend généralement, lorsqu'il est réalisé sous la forme d'un circuit intégré, son propre amplificateur d'erreur. Par conséquent, le circuit 5 fait double emploi mais est nécessaire en raison de la présence du bloc d'isolement (optocoupleur 9).

La figure 2 représente partiellement un deuxième exemple classique d'un circuit d'alimentation à découpage. L'exemple de la figure 2 est connu sous la dénomination d'un convertisseur abaisseur/élévateur de tension non-isolé et se caractérise par le fait que le condensateur Ci n'est plus en série avec l'inductance Li et le commutateur entre les deux bornes d'application de la tension redressée Vr, l'inductance étant toujours en parallèle avec une association en série de la diode de roue libre Di et du condensateur Ci. Cette disposition permet de faire fonctionner le convertisseur en élévateur de tension par rapport à la tension d'entrée.

Par souci de clarté, la figure 2 ne représente que les éléments du convertisseur qui diffèrent du montage de la figure 1. Ainsi, le circuit 2 de commande et l'interrupteur 1 ainsi que leurs composants de paramétrage associés n'ont pas été représentés. On notera toutefois que, dans le montage de la figure 2, la borne positive Sp de sortie correspond à la phase P de l'alimentation alternative, la diode de redressement (Dr, figure 1) ayant son anode connectée au neutre de l'alimentation alternative.

Le circuit de mesure 5' d'un convertisseur abaisseur/élévateur tel que représenté à la figure 2 est, par exemple, constitué d'un montage à base d'un comparateur 6 comme à la figure 1. Toutefois, la sortie du comparateur 6 est désormais connectée, par l'intermédiaire de la résistance R6, à l'anode de la photodiode 8 de l'optocoupleur 9 dont la cathode est connectée à la borne Sn de référence de la tension de sortie Vout. La diode Zener DZ est connectée entre la borne non-inverseuse de l'amplificateur 6 et la borne Sp positive de sortie, son anode étant connectée à l'entrée non-inverseuse. Dans l'exemple de la figure 2, la boucle de contre-réaction de l'amplificateur 6 a été simplifiée pour comprendre uniquement un condensateur C7. L'émetteur du phototransistor 10 est connecté à la borne Vfb du circuit 2 (figure 1) et son collecteur est connecté à la ligne PL.

Un convertisseur abaisseur/élévateur tel qu'illustré par la figure 2 souffre des mêmes inconvénients que ceux décrits en relation avec le convertisseur de la figure 1.

Dans certaines applications, le transistor 1 de type MOS à canal N peut être intégré avec son circuit électronique de commande sur une même puce. Un exemple d'un tel circuit intégré est un circuit, commercialisé par la société STMicroelectronics, et connu sous la dénomination commerciale VIPER.

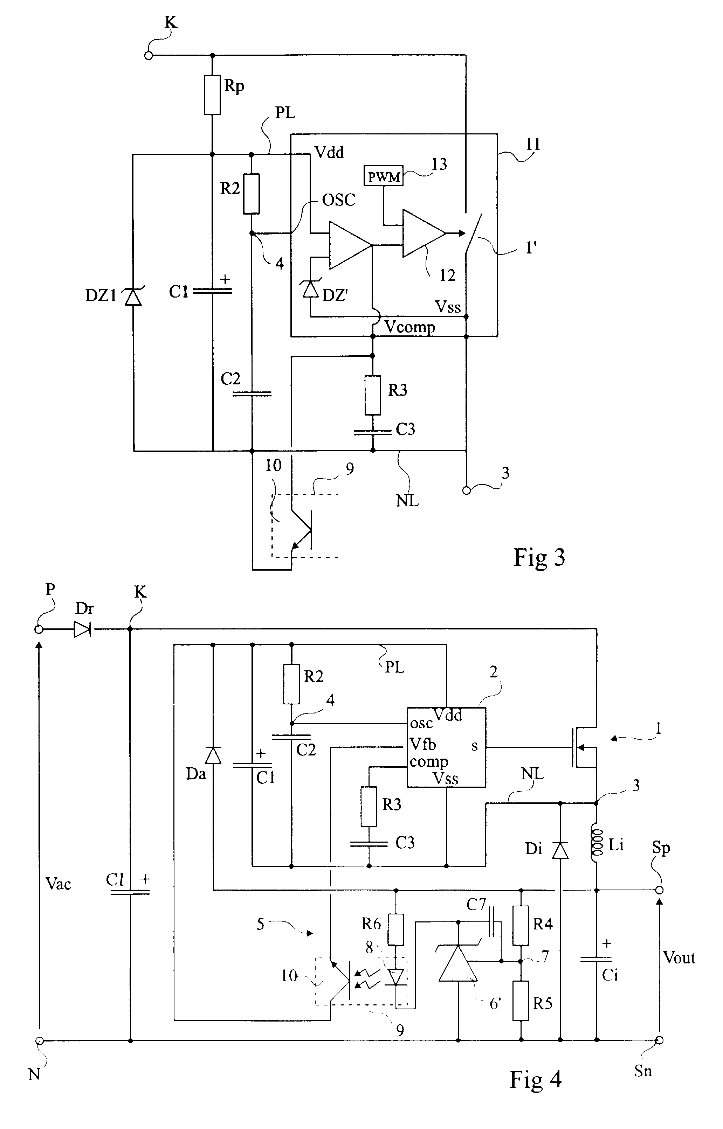

La figure 3 représente un exemple de schéma classique mettant en oeuvre ce composant 11. La représentation de la figure 3 est partielle en ce qu'elle se borne à représenter la partie commande de l'interrupteur 1', intégré au circuit 11. Le reste du montage est similaire, soit au montage de la figure 1, soit au montage de la figure 2 selon le type de convertisseur réalisé.

A la figure 3, le composant 11 VIPER a été symbolisé par son interrupteur intégré 1', commandé en modulation de largeur d'impulsion par un amplificateur 12 recevant, en entrée, une consigne d'oscillation fournie par un bloc 13 (PWM) et un signal d'erreur fourni par un amplificateur d'erreur 14 intégré. Le circuit VIPER 11 comprend une borne d'entrée Vdd destinée à recevoir une alimentation positive, une borne de référence de tension Vss, une borne OSC conditionnant la fréquence d'oscillation du bloc 13, et une borne Vcomp de compensation de la boucle de régulation. L'amplificateur 14 est associé à une référence de tension intégrée (symbolisée par une diode Zener DZ'), et son entrée de comparaison est connectée en interne à la borne d'alimentation positive Vdd. Le circuit 11 comporte également, bien entendu, des accès aux deux bornes de puissance de l'interrupteur 1', une de ces bornes (le drain du transistor MOS constituant l'interrupteur 1') correspondant à la borne de référence de tension Vss.

Un circuit VIPER tel qu'illustré par la figure 3 se caractérise par le fait qu'il est commandé en courant et que l'asservissement, c'est-à-dire la modification de largeur d'impulsions de commande de l'interrupteur 1', s'effectue en faisant varier une boucle de compensation du circuit intégré 11 qui cherche de lui-même à maintenir sa tension d'alimentation (Vdd-Vss).

Ainsi, dans une application à un convertisseur à découpage, la borne Vdd est connectée, par l'intermédiaire d'une résistance Rp, à la borne K d'application de la tension redressée. La borne OSC est reliée au point milieu 4 d'une association en série d'une résistance R2 et d'un condensateur C2 fixant, comme dans le cas de la figure 1, la fréquence d'oscillation. Une résistance R3, en série avec un condensateur C3, est connectée entre la borne Vcomp et le point milieu 3 de l'association en série du commutateur 1' avec l'inductance Li (non représentée). Un condensateur C1 est connecté entre la borne Vdd constituant une ligne positive PL d'alimentation locale du circuit 11 et la borne 3 constituant une ligne négative NL d'alimentation de ce circuit, reliée à la borne Vss. Le recours à un circuit 11 nécessite une diode Zener DZ1 pour rendre précise la tension d'alimentation locale. En effet, un tel circuit intégré est prévu pour réguler sa propre tension d'alimentation à une valeur donnée (par exemple, 13 volts) en étant alimenté sous une valeur pouvant être différente (par exemple, comprise entre 8 et 16 volts).

Pour faire varier la largeur des impulsions de fermeture de l'interrupteur 1', on modifie le potentiel appliqué sur la borne Vcomp, c'est-à-dire que l'on perturbe la boucle de compensation afin que l'amplificateur d'erreur 14 introduise une correction. Cela s'effectue, par exemple, par l'intermédiaire d'un transistor 10 dont le collecteur est connecté à la borne Vcomp et dont l'émetteur est connecté à la ligne NL. Quand le transistor 10 est rendu conducteur, il modifie l'alimentation du circuit 11 et, par voie de conséquence, la largeur des impulsions de fermeture de l'interrupteur 1'.

Comme précédemment, pour qu'un montage tel qu'illustré par la figure 3 puisse fonctionner dans un convertisseur non-isolé, le transistor 10 doit être un phototransistor d'un optocoupleur 9 dont la photodiode (non représentée) est commandée d'une manière similaire à l'un des deux montages illustrés par les figures 1 et 2.

Ainsi, même avec un circuit intégré du type représenté à la figure 3, un convertisseur qu'il soit abaisseur/élévateur ou abaisseur souffre des mêmes inconvénients que précédemment. En outre, en abaisseur de tension, le convertisseur ne peut pas délivrer une tension qui soit inférieure à la tension d'alimentation du circuit intégré.

La présente invention vise à proposer un nouveau convertisseur de tension à découpage, à faible consommation. L'invention vise, plus particulièrement, à minimiser la dissipation du circuit de commande de l'interrupteur du convertisseur.

La présente invention vise également à élargir la plage de fonctionnement en tension de sortie d'un convertisseur dont l'interrupteur principal est intégré avec son circuit de commande.

Un autre objet de la présente invention est de proposer un nouveau convertisseur à découpage qui évite le recours à un bloc d'isolement entre le circuit de mesure et le circuit de commande de l'interrupteur à découpage.

Pour atteindre ces objets, la présente invention prévoit un convertisseur de tension non-isolé, du type alimentation à découpage, comprenant un condensateur aux bornes duquel est prélevée une tension de sortie régulée au moyen d'un circuit de commande d'un interrupteur de fourniture de courant à un élément inductif, le convertisseur comportant un moyen pour alimenter localement le circuit de commande à partir de l'énergie de l'élément inductif, l'élément inductif présentant un point milieu entre deux enroulements et la tension de sortie étant inférieure à la tension d'alimentation locale du circuit de commande de l'interrupteur à découpage.

Selon un mode de réalisation de la présente invention, ledit moyen est constitué d'une diode intercalée entre une borne d'extrémité de l'élément inductif et une borne positive d'un condensateur d'alimentation locale du circuit de commande, la borne négative du condensateur d'alimentation locale étant connectée au point milieu de l'association en série de l'interrupteur et de l'élément inductif.

Selon un mode de réalisation de la présente invention, ledit circuit de commande est un circuit intégrant l'interrupteur.

Selon un mode de réalisation de la présente invention, ledit moyen alimente localement le circuit de commande à partir de la tension de sortie.

Selon un mode de réalisation de la présente invention, l'interrupteur est en série avec l'inductance et le condensateur de sortie entre deux bornes d'entrée.

Selon un mode de réalisation de la présente invention, une diode de roue libre est connectée entre le point milieu de l'élément inductif et la borne négative de sortie.

Selon un mode de réalisation de la présente invention, l'interrupteur est en série avec un des deux enroulements de l'inductance entre deux bornes d'entrée.

Selon un mode de réalisation de la présente invention, le point milieu de l'élément inductif est connecté à la borne positive du condensateur de sortie.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 à 3 décrites précédemment sont destinées à exposer l'état de la technique et le problème posé ;

la figure 4 représente un premier mode de réalisation d'un convertisseur abaisseur de tension non-isolé selon la présente invention ;

la figure 5 représente un deuxième mode de réalisation d'un convertisseur abaisseur de tension non-isolé selon la présente invention ;

la figure 6 représente un premier mode de réalisation d'un convertisseur abaisseur/élévateur de tension non-isolé selon la présente invention ;

la figure 7 représente un troisième mode de réalisation d'un convertisseur abaisseur de tension non-isolé selon la présente invention ;

la figure 8 représente un quatrième mode de réalisation d'un convertisseur abaisseur de tension non-isolé selon la présente invention ; et

la figure 9 représente un deuxième mode de réalisation d'un convertisseur abaisseur/élévateur de tension non-isolé selon la présente invention.

Les mêmes éléments ont été désignés par les mêmes références aux différentes figures. Pour des raisons de clarté, seuls les éléments nécessaires à la compréhension de l'invention ont été représentés aux figures et seront décrits par la suite. En particulier, les détails constitutifs des circuits intégrés susceptibles d'être utilisés par la présente invention n'ont pas été indiqués.

Une caractéristique de la présente invention est de prévoir un moyen pour prélever, sur l'énergie de l'élément inductif, l'alimentation nécessaire au bloc de commande de l'interrupteur de découpage. Ainsi, selon la présente invention, le bloc de commande de l'interrupteur de découpage n'est plus alimenté par la tension d'entrée. On évite ainsi le recours à une résistance (Rp, figures 1 à 3) devant supporter une haute tension et entraînant donc une forte dissipation.

Cette première caractéristique de l'invention est illustrée par la figure 4 qui représente un premier mode de réalisation d'un convertisseur abaisseur de tension non-isolé selon la présente invention. Le circuit de la figure 4 est à rapprocher du circuit de l'art antérieur représenté en figure 1. Il est alimenté par une tension redressée Vr prélevée sur la cathode K d'une diode de redressement Dr dont l'anode est connectée, par exemple, à la phase P d'une tension alternative Vac, par exemple, le secteur. Comme précédemment, un condensateur Cl est connecté entre la borne K et le neutre N de l'alimentation alternative.

Le mode de réalisation de la figure 4 concerne un convertisseur abaisseur, c'est-à-dire qu'un interrupteur 1 est connecté en série avec une inductance Li et un condensateur Ci entre les bornes K et N, la tension de sortie Vout étant prélevée aux bornes Sp, Sn du condensateur Ci. Une diode de roue libre Di est connectée entre la borne Sn et le point milieu 3 de l'association en série de l'interrupteur 1 avec l'inductance Li.

L'interrupteur 1 est commandé par un bloc 2 de modulation de largeur d'impulsion, par exemple, un circuit UCC3824, dont une borne de sortie s̱ est connectée à la grille de l'interrupteur 1. Dans l'exemple de la figure 4, la résistance (R1, figure 1) de sortie du bloc 2 n'a pas été représentée. Sa présence dépend de la constitution interne du circuit intégré constituant le bloc 2.

Comme précédemment, le point milieu 3 définit une ligne NL de référence pour le circuit de commande de l'interrupteur 1. Ainsi, une borne Vss du bloc 2, destinée à être connectée à un potentiel de référence local, est connectée à la ligne NL. De même, une borne COMP de compensation est connectée, par l'intermédiaire d'une association en série d'une résistance R3 avec un condensateur C3, à la ligne NL. La fréquence d'oscillation du bloc 2 est fixée par une résistance R2 en série avec un condensateur C2 entre une ligne PL d'alimentation positive du circuit de commande et la ligne NL, le point milieu 4 de cette association en série étant connecté à une borne OSC du bloc 2. Une borne destinée à recevoir une alimentation positive Vdd est connectée à la ligne PL. Enfin, un condensateur C1 relie les lignes PL et NL pour stabiliser la tension (Vdd-Vss) d'alimentation du circuit 2.

Selon la présente invention, la ligne PL est connectée, par l'intermédiaire d'une diode Da, à la borne Sp de sortie de l'alimentation à découpage, l'anode de la diode Da étant connectée à la borne Sp et sa cathode étant connectée à la ligne PL. Ainsi, selon la présente invention, aucune liaison n'existe entre le circuit de commande de l'interrupteur 1 et la borne d'entrée K du montage qui constitue généralement un bus haute tension. Selon la présente invention, on prélève une partie du courant de charge du condensateur Ci de sortie pour charger le condensateur C1 et ainsi alimenter le circuit de commande de l'interrupteur 1. Pour cela, on tire profit du fait que, quand le courant circule par la diode de roue libre Di, la tension Vout se retrouve aux bornes de l'inductance Li (en négligeant la chute de tension dans la diode Di).

La condition à respecter pour que l'alimentation locale du bloc 2 puisse être fournie par la tension de sortie Vout est que la diode Da conduise pendant les périodes de roue libre, c'est-à-dire quand l'interrupteur 1 est ouvert. Pour que cette condition soit respectée, il faut que la tension VC1 aux bornes du condensateur C1 (c'est-à-dire la tension d'alimentation Vdd-Vss souhaitée pour le circuit de commande), majorée de la chute de tension VDa dans la diode Da polarisée en direct, soit inférieure à la tension aux bornes de l'inductance Li. Or, la tension aux bornes de l'inductance Li est, pendant les périodes de roue libre, égale à la tension aux bornes du condensateur Ci (c'est-à-dire la tension de sortie Vout) majorée de la chute de tension en direct VDi dans la diode Di. Par conséquent, la condition qui doit être respectée est :

$$VC1 \leq Vout + VDi - VDa.$$

En première approximation, on peut supposer que la tension VDi est à peu près égale à la tension VDa. Par conséquent, pour que le circuit 2 puisse être alimenté à partir de la tension de sortie, il faut que la tension Vdd-Vss nécessaire à son alimentation soit inférieure à la tension de sortie Vout. En pratique, le courant dans la diode Di, c'est-à-dire le courant nécessaire à l'alimentation du bloc de commande de l'interrupteur 1, est nettement plus faible que le courant utilisé pour l'alimentation de la charge et qui circule dans la diode Di. Par conséquent, les chutes de tension en direct dans les diodes Di et Da ne sont pas rigoureusement égales. On peut considérer qu'il y a une légère différence de l'ordre de la centaine de millivolts.

On notera que l'alimentation du circuit de commande 2 est prioritaire par rapport à l'alimentation de la charge, de sorte que le montage proposé par la présente invention est particulièrement sûr. En effet, quand la tension VC1 est inférieure à la tension de sortie Vout, la diode de roue libre Di se bloque. Par conséquent, tout le courant de l'inductance sert alors à charger le condensateur C1, donc à alimenter le bloc 2. Par conséquent, le condensateur C1 est toujours alimenté de sorte que la tension à ses bornes est toujours égale à la tension de sortie. Dans le cas où la tension de sortie baisse par une diminution de la consigne, la tension aux bornes du condensateur C1 baisse également, ce qui conduit à augmenter le temps de conduction de l'interrupteur 1.

Dans le premier mode de réalisation illustré par la figure 4, l'asservissement de la tension de sortie Vout est effectué par un circuit d'asservissement 5 classique, par exemple, du type de celui représenté à la figure 1. Ainsi, une borne Vfb d'entrée de commande du circuit 2 est connectée à l'émetteur d'un phototransistor 10 d'un optocoupleur 9, le collecteur de ce phototransistor étant connecté à la ligne PL d'alimentation positive du bloc 2. La photodiode 8 de l'optocoupleur 9 est connectée, par son anode et par l'intermédiaire d'une résistance R6, à la borne Sp. Sa cathode est reliée à la sortie d'un amplificateur d'erreur 6, par exemple, un circuit connu sous la dénomination commerciale TL431. A la figure 4, l'amplificateur opérationnel représenté à la figure 1, associé à sa référence de tension (DZ), a été représenté par un seul élément référencé 6'. Une entrée d'erreur de l'amplificateur 6' est connectée au point milieu 7 d'une association en série d'une résistance R4 avec une résistance R5 entre les bornes Sp et Sn, un condensateur C7 étant connecté entre la sortie de l'amplificateur d'erreur 6' et le point 7. Le fonctionnement du circuit d'asservissement représenté à la figure 4 est identique au fonctionnement du circuit classique décrit en relation avec la figure 1.

Un avantage de la présente invention est qu'elle supprime toute dissipation d'énergie pour l'alimentation du circuit de commande de l'interrupteur de découpage 1 en évitant toute connexion de ce circuit de commande au bus haute tension par l'intermédiaire d'un élément résistif.

On notera que, dans le mode de réalisation illustré par la figure 4, la tension de sortie Vout minimale correspond sensiblement à la tension minimale d'alimentation nécessaire pour le circuit de commande 2 de l'interrupteur 1.

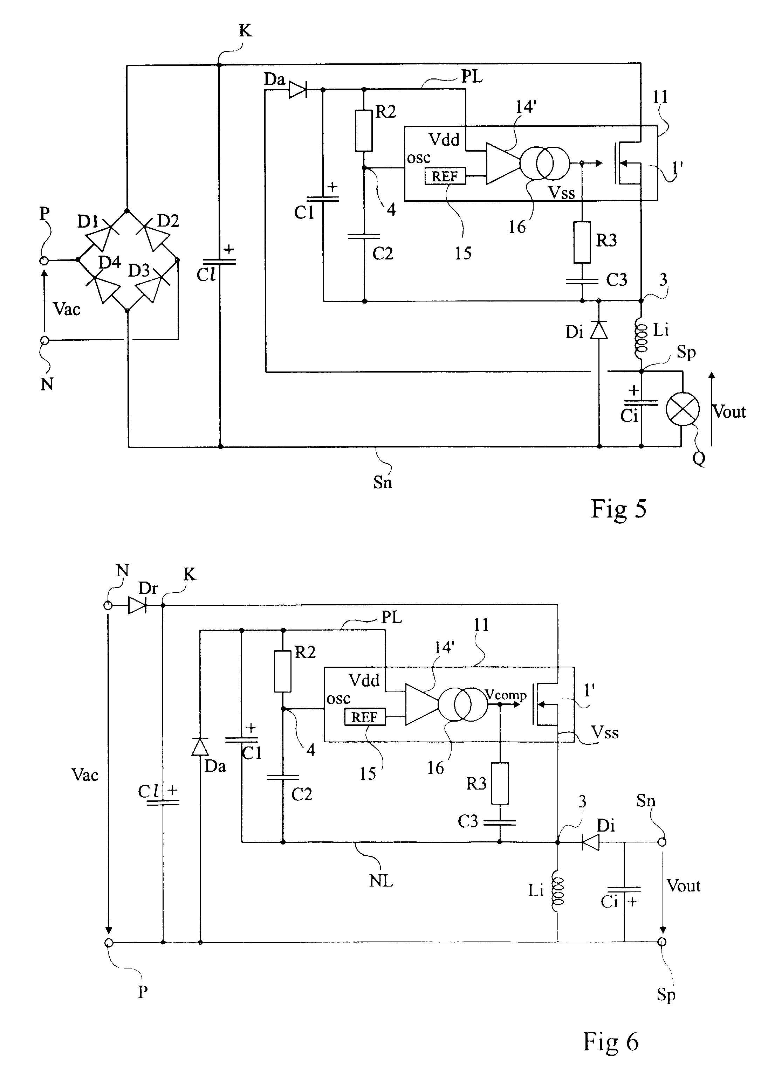

La figure 5 représente un deuxième mode de réalisation d'un convertisseur abaisseur de tension selon la présente invention. Ce mode de réalisation est destiné à illustrer une deuxième caractéristique de l'invention qui permet d'éviter le recours à un composant d'isolement pour asservir la tension de sortie du convertisseur.

Dans le mode de réalisation de la figure 5, on a supposé un redressement double alternance d'une tension alternative Vac au moyen d'un pont de diodes D1, D2, D3, D4 dont deux bornes de sortie redressée définissent les bornes positives K et de référence Sn du convertisseur. Comme précédemment, un condensateur Ci est connecté entre les bornes K et Sn. On notera que, dans tous les modes de réalisation de l'invention, on peut avoir recours à un redressement mono ou double alternance sans que cela modifie les caractéristiques de l'invention.

Le mode de réalisation illustré par la figure 5 prévoit l'utilisation d'un circuit intégré 11 regroupant un interrupteur haute tension 1', constitué d'un transistor MOS à canal N, et son circuit de commande. Un tel circuit, connu sous la dénomination commerciale VIPER, est disponible dans plusieurs versions selon la puissance de la charge (par exemple, 10, 20, 50 Watts).

Le mode de réalisation de la figure 5 concerne un convertisseur abaisseur dans lequel l'inductance Li et le condensateur Ci sont connectés en série entre le point 3 et la borne Sn. A la figure 5, une lampe Q a été représentée pour symboliser la charge recevant la tension Vout.

Comme dans le premier mode de réalisation, une diode Da sert à alimenter un condensateur C1 dont les bornes PL et NL définissent des lignes d'alimentation locale du circuit 11.

Le point milieu 4 d'une association en série d'une résistance R2 avec un condensateur C2 est relié à une borne d'entrée OSC du circuit 11 fixant la fréquence d'oscillation (par exemple, de l'ordre de 20 kHz) du découpage de la tension Vr.

A la figure 5, le circuit VIPER 11 a été représenté schématiquement de façon différente par rapport à la représentation de la figure 3. Il s'agit là d'une deuxième représentation schématique courante d'un tel circuit intégré. Cette représentation fait apparaître un amplificateur d'erreur 14' dont une entrée de référence reçoit une tension de référence (REF) d'un bloc 15 et dont une entrée de mesure est connectée à la borne Vdd d'alimentation du circuit 11. Cette borne Vdd est reliée à la ligne positive PL d'alimentation locale. L'amplificateur d'erreur 14' est connecté, par l'intermédiaire d'une source de courant 16, à une borne Vcomp de compensation du circuit 11 et donne une image du temps de fermeture du transistor MOS 1'. La borne Vcomp est, comme précédemment, connectée par l'intermédiaire d'une association en série d'une résistance R3 et d'un condensateur C3 formant un circuit de compensation, à la ligne négative NL d'alimentation locale connectée à la borne Vss du circuit 11.

Le mode de réalisation de la figure 5 reprend la première caractéristique de l'invention qui est de connecter une diode Da d'alimentation locale du circuit 11 à la borne Sp positive du condensateur de sortie Ci, pour alimenter le circuit 11. avec une dissipation minimale.

Toutefois, une caractéristique de la présente invention est que la diode Da sert ici également à mesurer la tension de sortie Vout pour réaliser l'asservissement au moyen du circuit 11. En effet, une variation de la tension Vout se traduira par une variation de la tension aux bornes du condensateur C1 qui modifiera donc la largeur des impulsions de commande de l'interrupteur 1'.

Comme cela a été indiqué précédemment, un composant VIPER 11 tel qu'utilisé par l'invention est un composant qui est destiné à réguler une tension de 13 volts. Par conséquent, le mode de réalisation illustré par la figure 5 s'applique au cas où la tension de sortie Vout est de l'ordre de 13 volts (minorés de la différence entre les chutes de tension dans les diodes Di et Da polarisées en direct).

Un avantage de la présente invention est qu'en prévoyant d'alimenter directement le circuit VIPER 11 à partir de la tension de sortie Vout, il est désormais possible d'éviter le recours à un transformateur d'isolement pour réaliser l'asservissement de la tension de sortie.

Un autre avantage de la présente invention est qu'elle évite le recours à un amplificateur d'erreur supplémentaire et permet donc d'utiliser l'amplificateur d'erreur intégré au bloc de commande de l'interrupteur 1'.

On notera que, si l'invention nécessite le recours à une diode Da pour l'alimentation locale du circuit VIPER, la diode Zener (DZ1, figure 3) prévue classiquement pour limiter la tension aux bornes du condensateur C1 n'est plus nécessaire.

La figure 6 représente un mode de réalisation d'un convertisseur abaisseur/élévateur de tension selon la présente invention. Ce mode de réalisation est destiné à exposer l'invention en relation avec un convertisseur dans lequel le condensateur Ci n'est pas en série avec l'inductance Li et l'interrupteur entre les bornes K et P d'application de la tension redressée Vr. Ainsi, ce mode de réalisation est à rapprocher du mode de réalisation classique illustré par la figure 2.

La borne positive du condensateur Ci définit la borne positive Sp délivrant la tension de sortie Vout et correspond ici à la phase P de l'alimentation alternative Vac. Par convention, le sens des flèches symbolisant la tension alternative Vac aux différentes figures indique la borne la plus positive.

La deuxième borne du condensateur Ci, définissant le point de référence Sn de la tension de sortie Vout, est connectée à l'anode de la diode de roue libre Di, dont la cathode est connectée au point milieu 3 de l'association en série de l'interrupteur 1' avec l'inductance Li entre les bornes K et P. La tension redressée présente aux bornes du condensateur CI est fournie, comme précédemment, par une diode de redressement Dr.

Le mode de réalisation de la figure 6 reprend la caractéristique de l'invention qui est de prélever l'alimentation locale du circuit de commande de l'interrupteur 1' (ici intégré dans un circuit VIPER 11), sur l'énergie de l'inductance Li, ici sur la tension de sortie Vout. Ainsi, une diode Da relie la borne Sp à une ligne PL définissant un potentiel local positif d'alimentation du circuit 11. La ligne de référence NL correspond, comme précédemment, au point milieu 3.

Les autres constituants du montage de la figure 6 (condensateurs C1, C2, C3 et résistances R2 et R3) sont montés de façon identique aux modes de réalisation précédents de l'invention.

On notera que, comme pour un convertisseur abaisseur tel que représenté aux figures 4 et 5, la tension aux bornes de l'inductance Li est, pendant les périodes de roue libre, égale à la tension Vout majorée de la tension aux bornes de la diode Di polarisée en direct. De plus, la tension aux bornes du condensateur C1 d'alimentation locale du circuit de commande est égale à la tension aux bornes de l'inductance Li minorée de la tension aux bornes de la diode Da polarisée en direct.

Par conséquent, le fonctionnement d'asservissement illustré en relation avec les figures précédentes s'applique aussi à ce mode de réalisation.

On notera que, tel qu'il est représenté à la figure 6, le montage est destiné à une tension de sortie Vout d'environ 13 volts. En effet, bien qu'il s'agisse d'un montage abaisseur/élévateur, le circuit VIPER 11 régule le courant dans le transistor 1' de sorte que sa propre tension d'alimentation soit de 13 volts. Ainsi, la tension aux bornes de la capacité C1 doit correspondre à cette valeur. La tension Vout correspond alors (à la figure 6) sensiblement à cette tension.

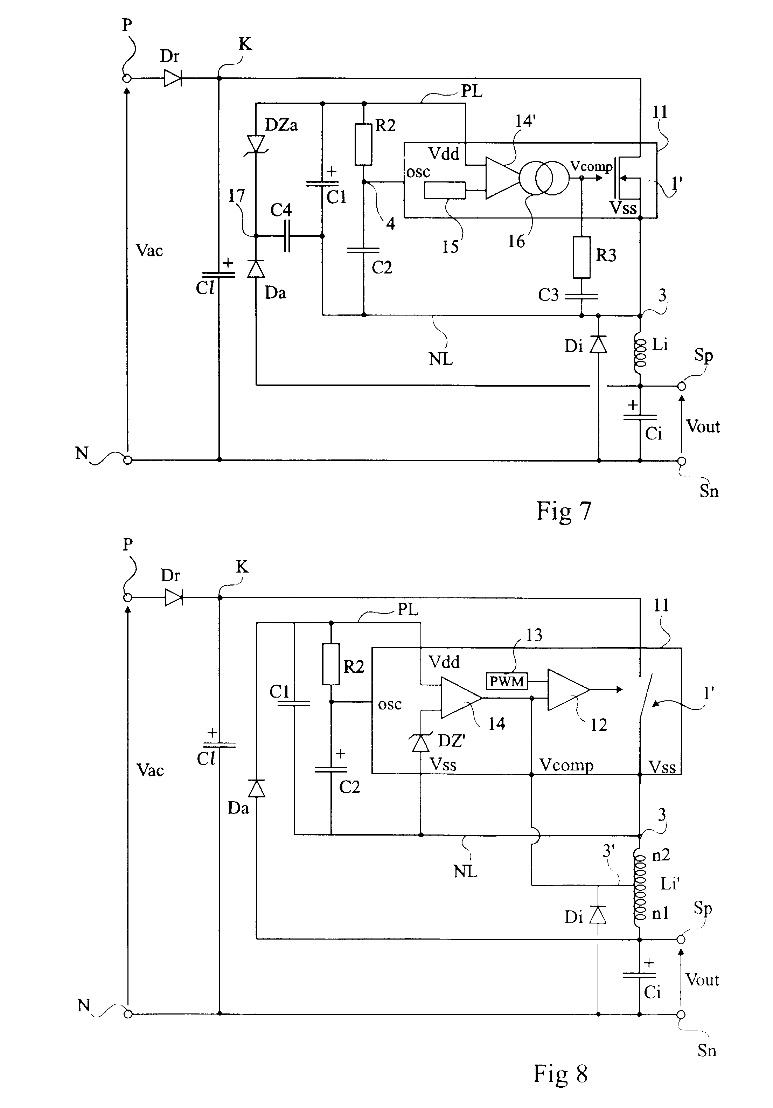

La figure 7 représente un troisième mode de réalisation d'un convertisseur selon la présente invention dans lequel la tension de sortie Vout est prévue pour être supérieure à la tension (13 volts) fixée par la tension d'alimentation du circuit intégré 11 de commande de l'interrupteur 1'.

Une caractéristique de ce mode de réalisation est de prévoit une diode Zener DZa en série avec la diode Da entre la ligne positive PL d'alimentation locale du circuit 11 et la borne positive Sp du condensateur Ci de sortie, le point milieu 17 de cette association en série reliant les cathodes respectives de la diode Da et de la diode Zener DZa.

Avec une telle diode Zener DZa, la tension seuil de cette diode Zener s'ajoute à la tension aux bornes du condensateur C1 et à la tension en direct de la diode Da entre les bornes Sp et 3. Par conséquent, la tension Vout de sortie du montage correspond ici à 13 volts (tension d'alimentation nécessaire au circuit 11), plus la différence entre les chutes de tension en direct dans les diodes Di et Da (de l'ordre de 0,1 volt), plus la tension seuil de la diode Zener DZa qui est alors choisie en conséquence.

De préférence, un condensateur C4 relie le point 17 à la ligne négative NL d'alimentation locale pour mieux stabiliser la tension Vout en fonction des variations de charge éventuelles.

La figure 8 représente un quatrième mode de réalisation préféré d'un convertisseur abaisseur selon la présente invention. Ce mode de réalisation reprend la première caractéristique de l'invention qui est de prévoir l'alimentation locale du circuit 11 à partir de l'énergie de l'élément inductif à l'aide d'une diode Da dont l'anode est connectée à une extrémité de l'élément inductif.

Ce mode de réalisation se caractérise par le fait que l'inductance Li' présente un point milieu 3' sur lequel est connectée la cathode de la diode de roue libre Di. La ligne de référence NL de l'alimentation locale du circuit 11 est, comme précédemment, connectée au point milieu 3 de l'association en série de l'interrupteur de découpage 1' avec l'inductance Li'.

Dans le mode de réalisation de la figure 8, le circuit intégré 11, regroupant le commutateur à découpage sous la forme d'un transistor MOS à canal N et son circuit de commande associé à l'amplificateur d'erreur 14, reprend les symboles utilisés en relation avec la figure 3.

Le recours à une inductance à point milieu permet que la tension de sortie Vout soit inférieure à la tension locale d'alimentation du circuit 11. Le rapport entre la tension de sortie Vout et la tension d'alimentation du circuit 11 dépend du rapport entre les nombres de spires respectives nl, n2 de part et d'autre du point milieu 3'.

La relation entre la tension VC1 aux bornes du condensateur C1 et la tension Vout aux bornes du condensateur Ci peut s'exprimer sous la forme :

$$VC1 = (1 + n2/n1)(Vout + VDi) - VDa,$$

où VDi et VDa représentent les chutes de tension dans les diodes respectives Di et Da polarisées en direct.

Le circuit de la figure 8 présente, outre tous les avantages associés aux modes de réalisation précédents, l'avantage supplémentaire de permettre la génération d'une tension Vout inférieure à 13 volts avec un circuit de type VIPER.

On notera que ce mode de réalisation peut également être mis en oeuvre dans le cas d'un convertisseur abaisseur/élévateur du type illustré par la figure 6. On retrouve alors l'avantage de pouvoir disposer d'une tension de sortie inférieure à la tension d'alimentation locale du circuit de commande. En prenant pour base ce schéma de la figure 6, on connecte le point milieu de l'inductance à la borne positive Sp du condensateur Ci et on supprime la connexion de cette borne positive avec le point milieu de l'association en série de l'inductance avec la diode Da.

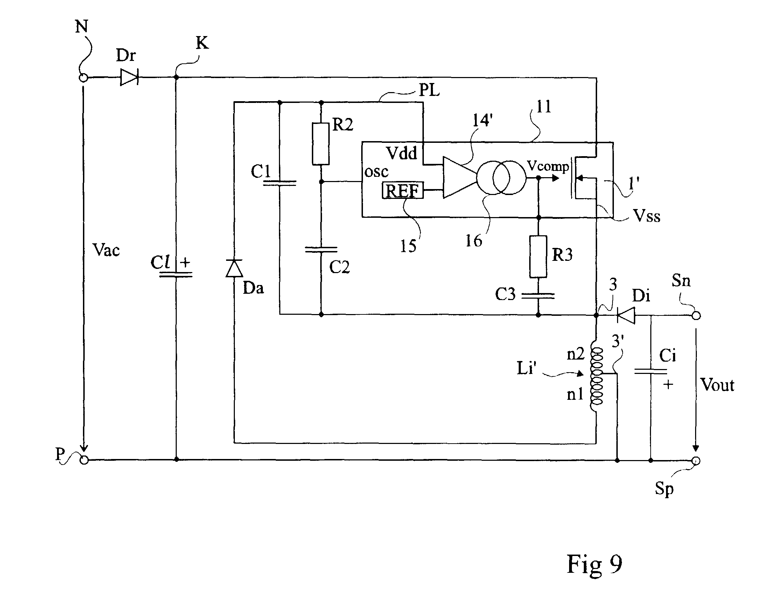

La figure 9 illustre un tel mode de réalisation d'un convertisseur abaisseur/élévateur avec inductance à point milieu. Le point 3' définit la borne Sp et est relié à la phase P de la tension Vac. L'inductance Li' est connectée entre le point 3 et l'anode de la diode Da. Que ce soit pour le mode de réalisation de la figure 8 ou pour celui de la figure 9, leur fonctionnement respectif se déduit de ce qui a été exposé en relation avec les figures précédentes en tenant compte de la caractéristique particulière liée à l'inductance à point milieu.

Bien entendu, la présente invention est susceptible de diverses variantes et modifications qui apparaîtront à l'homme de l'art. En particulier, les dimensionnements respectifs des différents composants utilisés seront déterminés en fonction de l'application et, notamment, en fonction de la tension de sortie souhaitée et de la puissance de la charge. En outre, on notera qu'une inductance à point milieu peut également être prévue avec un composant d'isolement pour asservir la tension de sortie, c'est-à-dire dans un convertisseur du type illustré par la figure 4 dont l'adaptation est à la portée de l'homme du métier à partir des indications données ci-dessus, notamment, en relation avec la figure 8.

## Revendications

**1.** Convertisseur de tension non-isolé, du type alimentation à découpage, comprenant un condensateur (Ci) aux bornes (Sp, Sn) duquel est prélevée une tension de sortie (Vout) régulée au moyen d'un circuit (2, 11) de commande d'un interrupteur (1, 1') de fourniture de courant à un élément inductif (Li'), caractérisé en ce qu'il comporte un moyen (Da) pour alimenter localement le circuit de commande à partir de l'énergie de l'élément inductif, l'élément inductif présentant un point milieu (3') entre deux enroulements (n1, n2), et la tension de sortie étant inférieure à la tension d'alimentation locale du circuit de commande de l'interrupteur à découpage.

2.  Convertisseur selon la revendication 1, caractérisé en ce que ledit moyen est constitué d'une diode (Da) intercalée entre une borne d'extrémité de l'élément inductif (Li') et une borne positive (PL) d'un condensateur (C1) d'alimentation locale du circuit de commande (2, 11), la borne négative du condensateur d'alimentation locale étant connectée au point milieu (3) de l'association en série de l'interrupteur (1') et de l'élément inductif (Li').

3.  Convertisseur selon la revendication 1 ou 2, caractérisé en ce que ledit circuit de commande (11) est un circuit intégrant l'interrupteur (1').

4.  Convertisseur selon l'une quelconque des revendications 1 à 3, caractérisé en ce que ledit moyen (Da) alimente localement le circuit de commande à partir de la tension de sortie (Vout).

5.  Convertisseur selon la revendication 4, caractérisé en ce que l'interrupteur (1') est en série avec l'inductance (Li') et le condensateur de sortie (Ci) entre deux bornes d'entrée (K, N).

6.  Convertisseur selon la revendication 4 ou 5, caractérisé en ce qu'une diode de roue libre (Di) est connectée entre le point milieu (3') de l'élément inductif (Li') et la borne négative de sortie (Sn).

7.  Convertisseur selon l'une quelconque des revendications 1 à 3, caractérisé en ce que l'interrupteur (1') est en série avec un des deux enroulements (n1, n2) de l'inductance (Li') entre deux bornes d'entrée (K, P).

8.  Convertisseur selon la revendication 7, caractérisé en ce que le point milieu (3') de l'élément inductif (Li') est connecté à la borne positive (Sp) du condensateur de sortie (Ci).

Fig 1

Fig 2

Fig 3

Fig 4

Fig 5

Fig 6

Fig 7

Fig 8

Fig 9

**Office européen des brevets**

# RAPPORT DE RECHERCHE EUROPEENNE

Numéro de la demande

EP 99 41 0084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 743 954 A (INT RECTIFIER CORP) 25 juillet 1997 (1997-07-25) * figure 1 * --- | 1-8 | H02M3/155 |
| A | DE 196 12 365 A (TELEFUNKEN MICROELECTRON) 2 octobre 1997 (1997-10-02) * colonne 1, ligne 52 - colonne 2, ligne 17 * * colonne 3, ligne 60 - colonne 4, ligne 31; figures 1,2 * ----- | 1-8 | |

| | |
|---|---|
| | **DOMAINES TECHNIQUES RECHERCHES (Int.Cl.7)** |
| | H02M |

Le présent rapport a été établi pour toutes les revendications

| Lieu de la recherche | Date d'achèvement de la recherche | Examinateur |
|---|---|---|
| LA HAYE | 21 septembre 1999 | Speiser, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 41 0084

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-09-1999

| Document brevet cité au rapport de recherche | Date de publication | Membre(s) de la famille de brevet(s) | Date de publication |
|---|---|---|---|
| FR 2743954 A | 25-07-1997 | DE 19701566 A | 18-09-1997 |
| | | GB 2309323 A | 23-07-1997 |
| | | IT MI970098 A | 20-07-1998 |
| | | JP 9298871 A | 18-11-1997 |
| | | SG 52908 A | 28-09-1998 |
| DE 19612365 A | 02-10-1997 | AUCUN | |

EPO FORM P0460

Pour tout renseignement concernant cette annexe : voir Journal Officiel de l'Office européen des brevets, No.12/82